(19)

Europäisches
Patentamt
European
Patent Office
Office européen
des brevets

(11)  **EP 1 534 032 B1**

(12)  **EUROPEAN PATENT SPECIFICATION**

(45) Date of publication and mention
of the grant of the patent:
**24.10.2007 Bulletin 2007/43**

(51) Int Cl.:
*H04Q 7/36* (2006.01)      *H04B 17/00* (2006.01)
*H04Q 7/34* (2006.01)

(21) Application number: **03292862.4**

(22) Date of filing: **18.11.2003**

(54) **Method for simulating operating conditions of a mobile telecommunication network**

Verfahren zur Simulation von Betriebsbedingungen eines mobilen Telekommunikationsnetzes

Procédé pour simuler des conditions opératives dans un réseau de télécommunication mobile

(84) Designated Contracting States:
**AT BE BG CH CY CZ DE DK EE ES FI FR GB GR
HU IE IT LI LU MC NL PT RO SE SI SK TR**

(43) Date of publication of application:
**25.05.2005 Bulletin 2005/21**

(73) Proprietors:
• **Mitsubishi Electric Information Technology
Centre
Europe B.V.
1119 NS Schiphol Rijk (NL)**
• **MITSUBISHI DENKI KABUSHIKI KAISHA
Chiyoda-ku
Tokyo 100-8310 (JP)**

(72) Inventor: **Voyer, Nicolas,
c/o Mitsubishi Electricité
35708 Rennes Cedex 7 (FR)**

(74) Representative: **Maillet, Alain
Cabinet le Guen & Maillet,
5, Place Newquay,
B.P. 70250
35802 Dinard Cedex (FR)**

(56) References cited:
**EP-A- 1 317 158**

• **TAGA T.: "Analysis for mean effective gain of
mobile antennas in land mobile radio
environments" IEEE TRANSACTIONS ON
VEHICULAR TECHNOLOGY, [Online] vol. 39, no.
2, May 1990 (1990-05), pages 117-131,
XP002276579 Retrieved from the Internet: <URL:
www.ieee.org> [retrieved on 2004-04-08]**
• **T. ZWICK, D. DIDASCALOU: "A stochastic spatial
channel model based on wave-propagation
modeling" IEEE JOURNAL ON SELECTED
AREAS IN COMMUNICATIONS, [Online] vol. 18,
no. 1, January 2000 (2000-01), pages 6-15,
XP002276580 Retrieved from the Internet: <URL:
www.ieee.org> [retrieved on 2004-04-08]**
• **K. KALLIOLA, K. SULONEN: "Angular power
distribution and mean effective gain og mobile
antenna in deifferent propagation environments"
IEEE TRANSACTIONS ON VEHICULAR
TECHNOLOGY, [Online] vol. 51, no. 5, September
2002 (2002-09), pages 823-838, XP002276581
Retrieved from the Internet: <URL:www.ieee.org>
[retrieved on 2004-04-08]**
• **J. TOFTGARD, S. N. HORNSLETH: "Effects on
portable antennas of the presence of a person"
IEEE TRANSACTIONS ON ANTENNAS AND
PROPAGATION, [Online] vol. 41, no. 6, June 1993
(1993-06), pages 739-746, XP002276582
Retrieved from the Internet: <URL:www.ieee.org>
[retrieved on 2004-04-08]**

EP 1 534 032 B1

## Description

The present invention concerns a method for simulating operating conditions of a mobile telecommunication network.

Simulation methods are known for optimising, before actual physical implementation of a mobile telecommunication system, a deployment of radio base stations included in said system and a design of a decision-making network infrastructure which is intended to manage said network, in order to define a system able to provide optimal communication service at the lowest possible cost.

Such a known simulation method is described in the patent document EP-A-1 317 158. The method consists in making a plurality of snapshots or configuration states of the network correlated one in respect to the following one by means of at least one correlating parameter. At each step of the method, a snapshot thus linked to the previous one is used. The connectivity of the mobile terminals is first calculated based on simulated pilot signals emitted by the base stations of the network and as received by the mobile terminals. Then, transmission powers in the uplink and the downlink for each connection are determined based on a coupling loss term that respectively counts for the average attenuation of the transmitted signals between the antenna connector of a mobile terminal and the antenna connector of a base station and conversely. The quality of service or grade of service of each connection between a mobile terminal and a base station can then be determined.

We recall that the coupling loss between a base station and a mobile terminal counts for four items : the antenna gain of the base station, the propagation loss over the transmission channel between the base station and the mobile terminal, the antenna gain of the mobile terminal as well as the body loss that counts for the loss involved in the body, generally the head, of the user that handles the mobile terminal.

A crucial point in a simulation method is to accurately assess the coupling loss term in order for an operator to properly design a mobile telecommunication network in term of coverage (the number of base stations needed to cover a zone) and in term of capacity (the number of mobile terminals that a network can simultaneously handle). This is due to the fact that the coupling loss term between a mobile terminal and a base station affects how the base station covers its proper cell and how it interferes with the neighbouring cells of the network. Interferences between cells have an important role in mobile telecommunication networks and particularly in CDMA networks.

The assessment of the coupling loss implies the assessment of all its components. Nowadays, assessments of the antenna gain of a base station and the propagation loss over the channel between the base station and the mobile terminal are very sophisticated and accurate operations. This is not unfortunately the case for the gain of the antenna of a mobile terminal and for the body loss.

Generally, for these two latter items, the assessments are done by means of simplistic models, i.e. for example by considering an omnidirectional radiating diagram for the antenna of the mobile terminal and by introducing correcting factors for the mean directional resulting gain as well as for the body loss.

Nevertheless, this approach is not correct due to the fact that the gain of an antenna of recent mobile terminals for which the trend is towards minimizing the emission in the direction of the user varies in a great measure with the directions. Actually, the mean directional gain is theoretically equal to 1 all over $4\pi$ steradians while the gain of an antenna can vary from -30 dB for the antenna poles to 2 dB or more in privileged directions. Thus, if signals are received by the antenna in a direction corresponding to a minimum of the gain, they can be strongly attenuated. A model of a mean gain constant all over the direction cannot take this situation into account and thus is not correct.

This approach is not correct also due to the body loss that also introduces a directional effect on the coupling loss.

Furthermore, the coupling loss can considerably vary with the usage that is made of a mobile terminal. For example, a mobile terminal is not in the same relationship with a base station if it is used either as a phone close to user's head near an ear or as a video terminal in the hands in front of the user's body. A model that don't take into account such situations is thus not correct.

The aim of the method of the present invention is to overcome the problem above raised.

For this purpose, the present invention concerns a method according to claim 1 for simulating operating conditions of a mobile telecommunication network comprising a plurality of base stations and a plurality of mobile terminals, each mobile terminal being handled by a user and forming with said user what is called a mobile unit.

Preferred embodiments are defined by the dependent claims. The characteristics of the present invention will emerge from a reading of the following description given in relation to the appended drawings, amongst which :

Fig. 1 depicts a mobile communication network for illustration of the method of the present invention,
Fig. 2 depicts the radiating diagram of a mobile terminal and,
Figs. 3a and 3b depict the way the relation between the directional vector of a mobile terminal and the speed vector is made according to two aspects of the present invention.

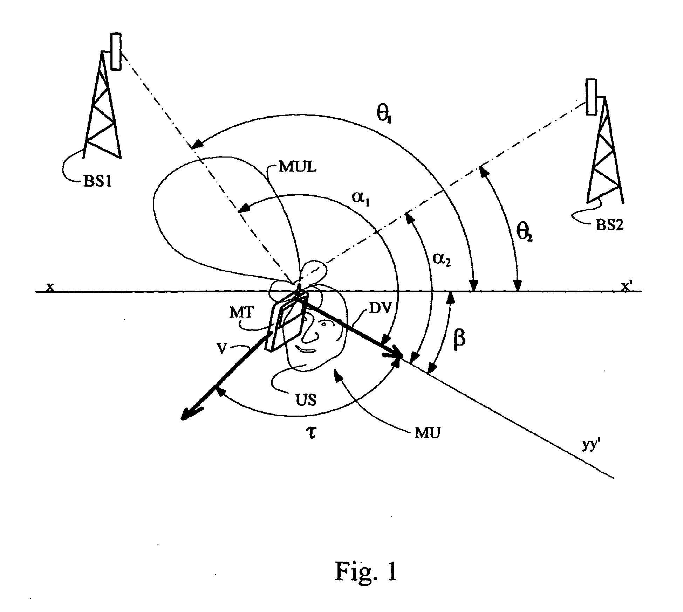

Fig. 1 depicts as an example a transmission network that comprises two base stations BS 1 and BS2 and a mobile terminal MT. A user US (only his head is shown) is using and handling the mobile terminal MT, the mobile terminal MT being against his right ear. During the communication of the user US, the base stations BS1 and BS2 send to the mobile terminal MT signals that are received by the antenna of the mobile MT and the mobile terminal MT sends signals to each of the base stations BS1 and BS2.

A simulation method generates snapshots that are representative of different configuration states of the network, generally given by the position of the mobile terminals relative to the base stations of the network, and simulates accordingly for each snapshot the levels of the signals that are received by each mobile terminal MT and those that are emitted by each mobile terminal towards the base stations. After a period of time and after having considered a plurality of snapshots, the simulation method enable the quality of service or grade of service that the network is able to present to be deduced. The entire simulation method can be considered as including a basic simulation function that is iteratively repeated for each snapshot and of which the result depends on the power levels as received by the base stations and by the mobile terminal.

If we consider only for clarity purposes, those power levels that are received by a mobile terminal MT from the two base stations of Fig. 1, one can write : $MT = f(P_R1, P_R2)$ where $P_R1$ and $P_R2$ are the power levels as received by the mobile terminal MT respectively from the base stations BS1 and BS2. The power levels $P_R1$ and $P_R2$ as received by the mobile terminal MT depend on the power levels $P_T1$ and $P_T2$ as transmitted by the base stations BS1 and BS2 as well as on the coupling losses between the mobile terminal of each of the both base stations BS1 and BS2, so one can write : $MT = f(P_T1 \times G_{BS1}, P_T2 \times G_{BS2})$ wherein $G_{BS1}$ and $G_{BS2}$ are the coupling losses between the base stations BS1 and BS2 respectively and the mobile terminal MT.

The coupling loss can be expressed as follows :

$$G = A_{BS} \times PL \times A_{MT} \times Body \ loss$$

wherein $A_{BS}$ is the antenna gain of the base station as considered, PL is the propagation loss between said base station and the mobile terminal, $A_{MT}$ is the antenna gain of the mobile terminal and BL is the body loss.

In a simulation method, the two first terms $A_{BS}$ and PL depend on the considered base station. They can be expressed as a quantity that notably varies with the direction θ of the beam as considered : $K(\theta) = A_{BS}(\theta) \times PL$.

As above-mentioned, the coupling loss also includes the gain of the antenna of the mobile terminal MT and the body loss. The first term can be deduced from the radiating diagram of the antenna whereas the second term can be deduced from measurements made for specific usage of the mobile terminal. As it can be easily understood, they are linked to an entity that is constituted of the user US and its mobile terminal MT as they are in relation one to the other. This relationship mainly depends on the use of the mobile terminal. This entity is called thereafter the mobile unit MU. The combination of the first and second terms forms an attenuation diagram, which is called thereafter the mobile unit loss function and which is shown in Fig. 1 under the reference MUL.

The coupling loss can then be expressed as follows :

$$G_{BS}(\theta) = K(\theta) \times MUL(\theta).$$

where MUL(θ) is the mobile unit loss and thus can be written as $A_{MT} \times Body\ Loss$.

The mobile unit loss MUL is linked to the mobile unit MU which means that it is known in a coordinates system that is linked to the mobile unit MU. The problem is that this coordinates system does not generally correspond to the coordinates system of the simulation process.

In the present description, note that the simulation process is made in a two-dimensional polar coordinates system that is defined by an axis xx' and an angle θ said the incidence angle. Nevertheless, it must be understood that the invention also applies in a three-dimensional coordinate system so that the polar coordinates can be expressed in terms of two angles θ and φ. In this case, the mobile unit loss diagram is also three-dimensional.

Let consider a coordinates system (a two-dimensional coordinates system only for simplicity purposes) that is linked to each mobile unit of the network (as defined just above) and that is used for the purpose of calculating the value taken by the mobile unit loss of the mobile terminal.

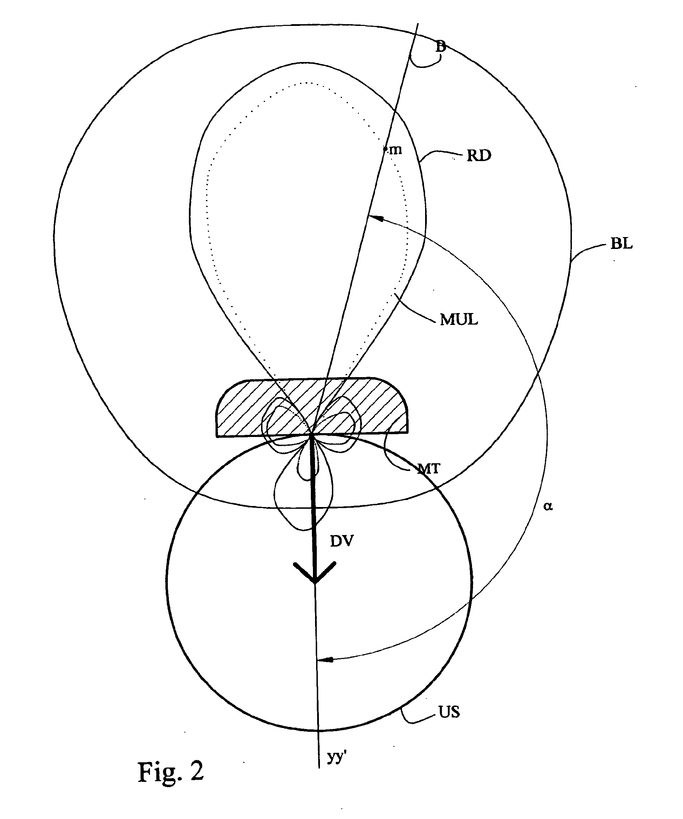

Fig. 2 shows a mobile unit MU as above defined and that is constituted of a mobile terminal MT and an user US in a particular relation one to the other. The coordinate system linked to the mobile unit MU is a two-dimensional polar coordinates system that is defined by an origin axis yy' and an angle $\alpha$. For purpose of simplicity, the axis yy' is materialized by a vector, called the directional vector of the mobile unit MU and is referenced as to DV. The directional vector DV is linked to the mobile unit MU. Fig. 2 also shows the radiating diagram RD of the antenna of the mobile MT and the diagram BL of the body loss of the user in the particular relationship of the user and its mobile terminal MT in a considered usage. The resulting mobile unit loss diagram MUL which is a combination of the radiating diagram RD of the antenna of the mobile MT and the diagram BL of the body loss of the user is also shown.

When a beam B is incident with an angle of $\alpha$ in relation with the directional vector DV, the loss of the mobile unit is given in the coordinates system linked to the mobile unit MU by MUL($\alpha$), which results in the point **m** in the resulting diagram.

The directional vector DV of the mobile unit MU, as shown in Fig. 1, forms an angle $\beta$ with the axis xx' of the coordinate system for the calculation of the simulation process. The coupling loss G($\theta$) can be thus deduced from the mobile unit loss MUL as determined in the coordinates system linked to the mobile unit MT by the following expression :

$$G(\theta) = K(\theta) \times MUL(\theta + \beta)$$

As it can be understood, the angle $\beta$ depends on the position and on the orientation of the mobile unit MU at the present moment, i.e. for the actual snapshot.

Note that the expression giving the result of the basic simulation function for the mobile terminal MT of Fig. 1 becomes the following :

$$\text{Basic simulation function for the mobile terminal MT} = f\,(P_T1 \times G_{BS1}, P_T2 \times G_{BS2})$$

$$= f\,(P_T1 \times G_{BS1}(\theta_1), P_T2 \times G_{BS2}(\theta_2))$$

$$= f\,(P_T1 \times K_{BS1}(\theta_1) \times MUL(\theta_1 + \beta), P_T2 \times K_{BS2}(\theta_2) \times MUL(\theta_2 + \beta))$$

where $\theta_1$ and $\theta_2$ are the incidence angle of the beam emitted by the base stations BS1 and BS2 and $K_{BS1}(\theta_1)$ and $K_{BS2}(\theta_2)$ are factors linked to the base stations BS1 and BS2 for the directions given by the angle $\theta_1$ and $\theta_2$.

In a simulation process, the displacement of the mobile terminal MT, and therefore the displacement of the mobile unit MU, is given at each snapshot.

According to the invention, a relationship is formed between the displacement of the mobile unit MU (and therefore the displacement of the mobile terminal MT) and the coordinates system linked to the mobile unit in order for that system to be oriented relative to the coordinates system of the simulation process.

Generally, the displacement of the mobile unit is represented by its speed vector V. The origin axis of the mobile unit loss diagram MUL is represented by the directional vector DV (as above mentioned). So, according to the invention, a relationship is formed between the speed vector V and the directional vector DV of the mobile unit MU. Therefore, as the speed vector V of the mobile unit MU is given, the directional vector DV of the mobile unit MU can be determined thanks to this relationship. The angle $\beta$ can also be deduced and the mobile unit loss MUL($\theta + \beta$) for the considered beam can be obtained from the above expressions. The coupling loss G($\theta$) can be then calculated : G($\theta$) = K($\theta$) x MUL ($\theta + \beta$).

According to an embodiment of the present invention, this relationship is only an angular relationship. For example, this expression can be under the form : the speed vector V and the directional vector form together an angle which value is $\tau$ (see Fig. 1). In this case, the angle $\beta$ can be calculated by the following expression :

$$\beta = \{\text{angle between V and xx'}\} - \tau.$$

This relationship between the speed vector V and the directional vector DV depends on the usage of the mobile terminal at the considered time. For example, when using a vocal service, the mobile terminal MT is against the left (or the right) of the head of the user, slightly forwardly oriented. The directional vector will be then nearly perpendicular to the speed vector and slightly downwardly oriented whereas the speed vector is horizontal (see Fig. 1).

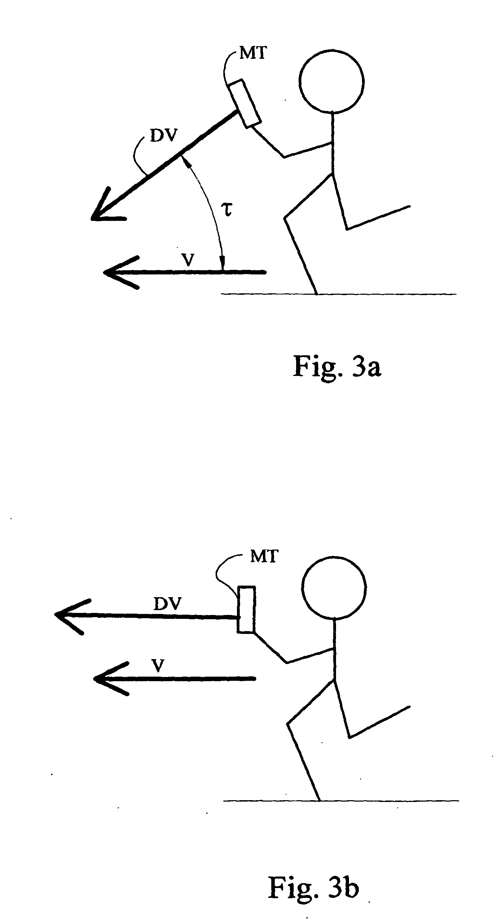

When using a video service, the mobile terminal MT is being in front of the eyes of the user and downwardly pointed. The directional vector will be then in the direction of the speed vector downwardly pointing (see Fig. 3a).

When using the mobile terminal as a camera, it is also in front of the user but now forwardly oriented. In this case, the directional vector is somewhat parallel to the speed vector (see Fig. 3b).

In the present description, for purpose of simplicity, the coordinates systems that are considered are two-dimensional systems and the polar coordinates are expressed in terms of an angle $\theta$ and a magnitude. One skilled in the art will understand that the coordinates systems can be three-dimensional coordinates systems so that the polar coordinates can then be expressed in terms of two angles $\theta$ and $\varphi$. In this case, the mobile unit loss diagram is also a three-dimensional diagram and two angles are to be considered between the directional reference axis xx' and the directional vector DV of the mobile unit.

### Claims

1. Method for simulating operating conditions of a mobile telecommunication network comprising a plurality of base stations (BS1,BS2) and a plurality of mobile terminals (MT), each mobile terminal (MT) being handled by a user (US) and forming with said user what is called a mobile unit (MU), said method generating a plurality of snapshots representative of different states of the network **characterized in that** it comprises a simulation step consisting of simulating accordingly for each snapshot the levels of the signals that are received by each mobile terminal (MT) and those that are emitted by each mobile terminal (MT) towards the base stations, the simulation step including a step for determining the value of a function, called mobile unit loss function (MUL), representative of the losses due to the mobile antenna gain and the presence of the body of the user, defined in relation with a coordinates system linked to each mobile unit (MU), and **in that** said method includes a step for orientating the coordinates system linked to each mobile unit (MU) based on the displacement of said mobile unit (MU).

2. Method for simulating operating conditions according to claim 1, **characterized in that** the step of orientating the coordinates system of the mobile unit loss function (MU) is based on the simulated usage done by the user of the considered mobile terminal (MT) which determines its orientation.

3. Method for simulating operating conditions according to one of the previous claims, **characterized in that** the coordinates system is a polar coordinate system defined by a directional vector (DV) representative of the origin axis of the mobile unit loss function (MUL) and by at least one angle of incidence.

4. Method for simulating operating conditions according to one of the previous claims, **characterized in that** the displacement of a mobile un (MU) is represented by the speed vector (V) of said mobile unit (MU).

5. Method for simulating operating conditions according to claim 3 or 4, **characterized in that** the step of orientating the coordinates system which the mobile unit loss (MUL) is linked to includes a step of defining a relationship between said directional vector (DV) linked to a mobile unit (MU) and the speed vector (V) thereof.

6. Method for simulating operating conditions according to one of the previous claims, **characterized in that** the mobile unit loss function (MUL) includes the radiating diagram of the antenna of the mobile terminal (MT) of said mobile unit (MU).

7. Method for simulating operating conditions according to one of the previous claims, **characterized in that** the mobile unit loss function (MUL) includes; the body loss function (BL) of the user handling said mobile terminal (MT) of said mobile unit (MU).

### Patentansprüche

1. Verfahren zum Simulieren von Betriebsverhältnissen eines Mobilfunk-Telekommunikationsnetzes mit einer Vielzahl von Basisstationen (BS1, BS2) und einer Vielzahl von mobilen Endgeräten (MT), wobei jedes mobile Endgerät (MT) durch einen Anwender (US) gehandhabt wird und mit dem Anwender das bildet, was mobile Einheit (MU) genannt wird, wobei das Verfahren eine Vielzahl von Momentaufnahmen erzeugt, die unterschiedliche Zustände des Netzes darstellen, **dadurch gekennzeichnet, dass** es einen Simulationsschritt aufweist, der aus einem entsprechenden Simulieren für jede Momentaufnahme der Pegel der Signale, die von jedem mobilen Endgerät (MT) empfangen werden, und denjenigen, die von jedem mobilen Endgerät (MT) in Richtung zu den Basisstationen (BS1, BS2) ausgesendet werden, besteht, wobei der Simulationsschritt einen Schritt zum Bestimmen des Werts einer Funktion enthält, die Funktion für einen Verlust der mobilen Einheit (MUL) genannt wird, welche Funktion die Verluste aufgrund der Verstärkung der mobilen Antenne und des Vorhandenseins des Körpers des Anwenders darstellt, definiert in Bezug zu einem Koordinatensystem, das mit jeder mobilen Einheit (MU) verbunden ist, und dass das Verfahren einen Schritt zum Ausrichten des mit jeder mobilen Einheit (MU) verbundenen Koordinatensystems basierend auf einer Verlagerung der mobilen Einheit (MU) enthält.

2. Verfahren zum Simulieren von Betriebsverhältnissen nach Anspruch 1, **dadurch gekennzeichnet, dass** der Schritt zum Ausrichten des Koordinatensystems der Funktion für einen Verlust der mobilen Einheit (MUL) auf der durch den Anwender des betrachteten mobilen Endgeräts (MT), das seine Ausrichtung bestimmt, durchgeführten simulierten Nutzung basiert.

3. Verfahren zum Simulieren von Betriebsverhältnissen nach einem der vorangehenden Ansprüche, **dadurch gekennzeichnet, dass** das Koordinatensystem ein Polarkoordinatensystem ist, das durch einen Richtungsvektor (DV), der die Ursprungsachse der Funktion für einen Verlust der mobilen Einheit (MUL) darstellt, und durch wenigstens einen Einfallswinkel definiert wird.

4. Verfahren zum Simulieren von Betriebsverhältnissen nach einem der vorangehenden Ansprüche, **dadurch gekennzeichnet, dass** die Verlagerung einer mobilen Einheit (MU) durch den Geschwindigkeitsvektor (V) der mobilen Einheit (MU) dargestellt wird.

5. Verfahren zum Simulieren von Betriebsverhältnissen nach Anspruch 3 oder 4, **dadurch gekennzeichnet, dass** der Schritt zum Ausrichten des Koordinatensystems, mit welchem der Verlust der mobilen Einheit (MUL) verbunden ist, einen Schritt zum Definieren einer Beziehung zwischen dem mit einer mobilen Einheit (MU) verbunden Richtungsvektor (DV) und ihrem Geschwindigkeitsvektor (V) enthält.

6. Verfahren zum Simulieren von Betriebsverhältnissen nach einem der vorangehenden Ansprüche, **dadurch gekennzeichnet, dass** die Funktion für einen Verlust der mobilen Einheit (MUL) das Strahlungsdiagramm der Antenne des mobilen Endgeräts (MT) der mobilen Einheit (MU) enthält.

7. Verfahren zum Simulieren von Betriebsverhältnissen nach einem der vorangehenden Ansprüche, **dadurch gekennzeichnet, dass** die Funktion für einen Verlust der mobilen Einheit (MUL) die Körper-Verlustfunktion (BL) des Anwenders enthält, der das mobile Endgerät (MT) der mobilen Einheit (MU) handhabt.

**Revendications**

1. Méthode pour simuler les conditions opérationnelles d'un réseau de télécommunication mobile comprenant une pluralité de stations de base (BS1, BS2) et une pluralité de terminaux mobiles (MT), chaque terminal mobile (MT) étant utilisé par un utilisateur (US) et formant avec cet utilisateur ce qui est appelé une unité mobile (MU), ladite méthode générant une pluralité d'images représentatives de différents états du réseau **caractérisée en ce qu'**elle comprend une étape de simulation consistant en la simulation selon chaque image des niveaux de signaux qui sont reçus par chaque terminal mobile (MT) et de ceux qui sont émis par chaque terminal mobile (MT) à destination des stations de base (BS1, BS2), l'étape de simulation incluant une étape pour déterminer la valeur d'une fonction (MUL) appelée fonction de perte de l'unité mobile, représentative des pertes dues au gain de l'antenne mobile et à la présence du corps de l'utilisateur, définie en relation avec un système de coordonnées lié à chaque unité mobile (MU), et **en ce que** ladite méthode inclue une étape pour orienter le système de coordonnées lié à chaque unité mobile (MU) basée sur le déplacement de ladite unité mobile (MU).

2. Méthode pour simuler les conditions opérationnelles selon la revendication 1, **caractérisée en ce que** l'étape d'orientation du système de coordonnées de la fonction de perte de l'unité mobile (MUL) est basée sur l'usage simulé fait par l'utilisateur du terminal mobile (MU) considéré qui détermine son orientation.

3. Méthode pour simuler les conditions opérationnelles selon l'une des revendications précédentes, **caractérisée en ce que** le système de coordonnées est un système de coordonnées polaire défini par un vecteur directionnel (DV) représentatif de l'axe d'origine de la fonction de perte de l'unité mobile (MUL) et par au moins un angle d'incidence.

4. Méthode pour simuler les conditions opérationnelles selon l'une des revendications précédentes, **caractérisée en**

**ce que** le déplacement d'une unité mobile (MU) est représentée par un vecteur de vitesse (V) de ladite unité mobile (MU).

5. Méthode pour simuler les conditions opérationnelles selon l'une des revendications 3 ou 4, **caractérisée en ce que** l'étape d'orientation du système de coordonnées auquel la perte de l'unité mobile (MUL) est lié inclut une étape de définition d'une relation entre ledit vecteur directionnel (DV) lié à une unité mobile (MU) et son vecteur de vitesse (V).

6. Méthode pour simuler les conditions opérationnelles selon l'une des revendications précédentes, **caractérisée en ce que** la fonction de perte de l'unité mobile (MUL) inclut un diagramme d'émission de l'antenne du terminal mobile (MU) de ladite unité mobile (MU).

7. Méthode pour simuler les conditions opérationnelles selon l'une des revendications précédentes, **caractérisée en ce que** la fonction de perte de l'unité mobile (MUL) inclut la fonction de perte du corps de l'utilisateur (US) utilisant ledit terminal mobile (MT) de ladite unité mobile (MU).

Fig. 1

Fig. 2

MT

DV

$\tau$

V

Fig. 3a

MT

DV

V

Fig. 3b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1317158 A